Europäisches Patentamt

European Patent Office

Office européen des brevets

(11) Veröffentlichungsnummer: **0 111 824**
**B1**

(12) ## EUROPÄISCHE PATENTSCHRIFT

(45) Veröffentlichungstag der Patentschrift:
05.11.86

(51) Int. Cl.⁴: **B 60 P 1/48**

(21) Anmeldenummer: **83112257.7**

(22) Anmeldetag: **06.12.83**

(54) Absetzkipper-Aufbau für Lastwagen.

(30) Priorität: **15.12.82 CH 7300/82**

(43) Veröffentlichungstag der Anmeldung:
**27.06.84 Patentblatt 84/26**

(45) Bekanntmachung des Hinweises auf die Patenterteilung:
**05.11.86 Patentblatt 86/45**

(84) Benannte Vertragsstaaten:
**AT DE FR GB IT NL SE**

(56) Entgegenhaltungen:
**US-A-2 564 250**
**US-A-3 687 319**

(73) Patentinhaber: **Ernst Wirz AG Kipper- und Maschinenfabrik, Tramstrasse, CH- 8707 Uetikon am See (CH)**

(72) Erfinder: **Ryffel, Martin, Gruebstrasse 23, CH- 8706 Meilen (CH)**

(74) Vertreter: **Blum, Rudolf Emil Ernst, c/o E. Blum & Co Patentanwälte Vorderberg 11, CH- 8044 Zürich (CH)**

## Beschreibung

Die vorliegende Erfindung betrifft einen Absetzkipper-Aufbau für Lastwagen, mit an Trägern angeordneten Schwenkarmen und Arbeitszylindern, üblicherweise Hydraulikzylindern, zu deren Betätigung.

Zweck und Aufgabe der vorliegenden Erfindung ist die Schaffung eines Absetzkipper-Aufbaus der genannten Art, dessen Ladefläche eben ist und auf minimaler Höhe mit dem hinteren Kotflügel liegt. Es kann damit die grösstmögliche Breite der Ladefläche erreicht werden. Zudem soll die Schwenkbewegung der Arme nicht durch die Abstützung eingeschränkt werden.

Bei bekannten Absetzkipper-Aufbauten liegen links, rechts oder beidseitig der Schwenkarme Längsträger, die die Kräfte aus den Hydraulikzylindern und die Biegemomente aus den Abstützungen übernehmen. Die nutzbare Ladefläche wird dabei um die Breiten der Längsträger schmäler. Ist man auf die gesamte Breite angewiesen, muss die eigentliche Ladefläche über die Längsträger angehoben werden, was sich nachteilig auf den Fahrzeugschwerpunkt und die Geometrie der Arme auswirkt.

Die erfindungsgemässe Ausbildung des Absetzkipper-Aufbaus ergibt sich aus dem kennzeichnenden Teil des Patentanspruchs 1.

Ein Ausführungsbeispiel eines erfindungsgemässen Absetzkipper-Aufbaus wird nachstehend anhand der Zeichnung näher beschrieben. Es zeigen:

Fig. 1 eine Draufsicht auf einen Aufbau nach der Erfindung,

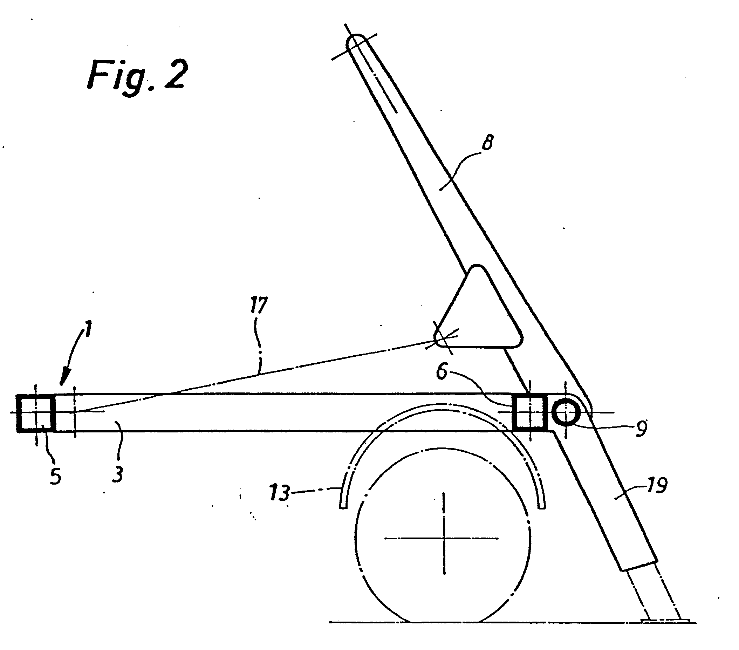

Fig. 2 einen Schnitt entlang der Linie A-A des Aufbaus nach Fig. 1, und

Fig. 3 einen Querschnitt entlang der Linie B-B des Aufbaus nach Fig. 1.

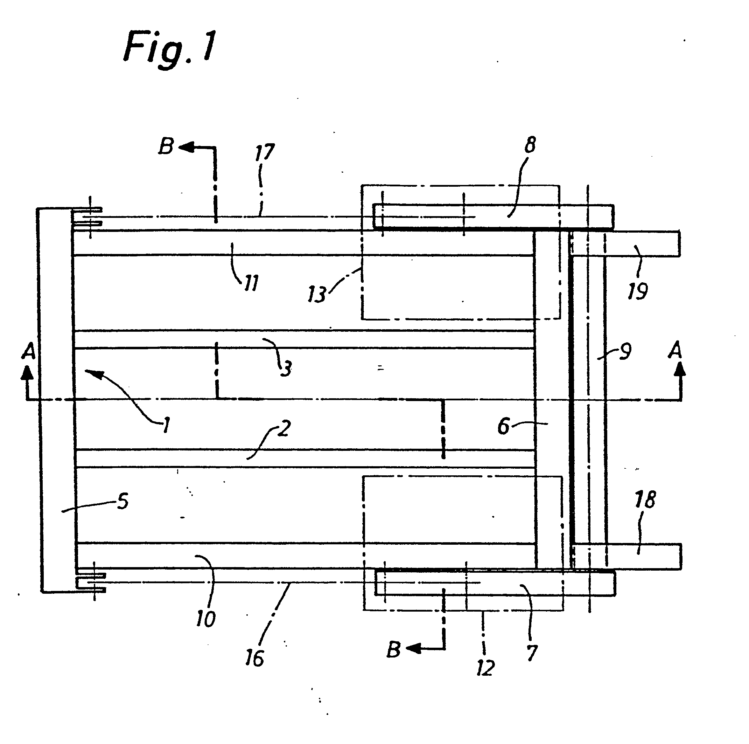

Der in Figur 1 der Zeichnung in Draufsicht gezeigte Absetzkipper-Aufbau weist im wesentlichen einen I-förmigen Rahmen 1 aus den beiden Längsträgern 2, 3 und einem vorderen sowie einem hinteren Querträger 5 bzw. 6 auf. Zwischen den beiden Querträgern 5, 6 liegen Stäbe 10, 11.

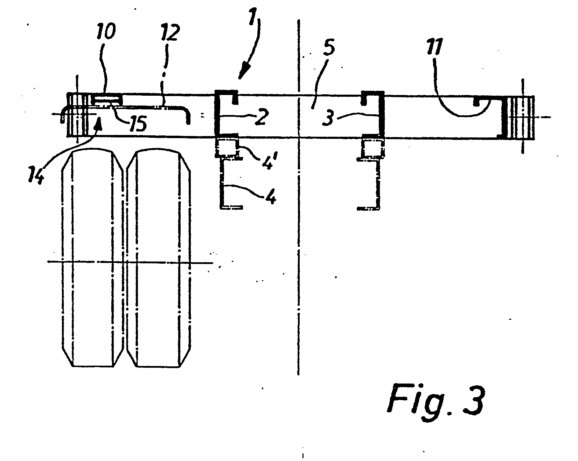

Wie insbesondere aus Fig. 3 ersichtlich ist, wird der Rahmen 1 über die beiden Längsträger 2, 3 auf dem Fahrzeugchassis 4 abgestützt und zwar über Hilfsträger 4'.

Die Schwenkarme 7, 8 sind auf einer Welle 9 montiert und drehen sich mit der Welle in Lagern (nicht dargestellt) zwischen den beiden teleskopisch ausfahrbaren Abstützungen 18 und 19.

Die Abstützungen 18, 19 sind mit dem hinteren Querträger 6 verbunden. Grundsätzlich könnte die Welle 9 durch den Querträger 6 führen. Auf jeden Fall liegen die Arme 7, 8 ausserhalb der Stäbe 10, 11, und die Stäbe 10, 11 liegen in Querrichtung des Aufbaus ausserhalb der Längsträger 2, 3.

Die Stäbe 10, 11 weisen über den Kotflügeln 12, 13 passende Aussparungen 14 im unteren Bereich und Verstärkungen 15 im oberen Bereich auf (siehe Fig. 3, linke Seite). Das Widerstandsmoment der Stäbe 10, 11 ist daher wesentlich geringer als das Widerstandsmoment der Längsträger 2, 3. Dies erlaubt eine äusserst niedrige Bauweise des Aufbaus.

Die Arbeitszylinder, normalerweise hydraulisch betätigbare Kolben-Zylinder-Aggregate 16, 17 (lediglich schematisch angedeutet), sind zwischen den Schwenkarmen 7, 8 und Anlenkstellen am vorderen Querträger 5 angeordnet.

Wie bereits erwähnt, sind am hinteren Querträger 6 nach unten ragende, teleskopartig ausfahrbare Abstützungen 18, 19 vorhanden.

Bei der gezeigten Konstruktion dienen die Längsträger 2, 3 sowohl zur Abstützung des Rahmens 1 auf dem Fahrzeugchassis 4 als auch zur Aufnahme der Biege- und Torsionsmomente.

Die Stäbe 10, 11 sollen im wesentlichen lediglich Zug- und Druckkräfte aufnehmen. Aus diesem Grund werden hierfür Profile mit geringem Widerstandsmoment verwendet, verglichen mit dem Widerstandsmoment der Längsträger 2, 3.

Zum Aufnehmen von Lasten (Mulden, Container) liegt die obere Stützfläche der Längsträger 2, 3 vorzugsweise etwas höher als die übrigen Teile des Rahmens 1 und die Stäbe 10, 11 (Fig. 3).

Dank der gezeigten Konstruktion wird bei optimaler bzw. maximaler Ladeflächenbreite eine niedere, knapp über den Kotflügeln liegende Ladehöhe erreicht.

## Patentansprüche

1. Absetzkipper Aufbau für Lastwagen, mit an Trägern angeordneten Schwenkarmen (7, 8) und Arbeitszylindern (16, 17) zu deren Betätigung, dadurch gekennzeichnet, dass die Träger Teile eines flachen I-förmigen Rahmens (1) sind, wobei der Steg des I-Rahmens aus wenigstens zwei Längsträgern (2, 3) besteht, welche der Abstützung des Aufbaus auf dem Fahrzeugchassis (4) und der Aufnahme der Last dienen, und wobei die Balken des I-Rahmens aus wenigstens einem hinteren und einem vorderen, mit den Längsträgern (2,3) verbundenen Querträger (5, 6) bestehen, dass die beiden Schwenkarme (7, 8) auf einer im Bereich des hinteren Querträgers (6) angebrachten Welle (9) montiert sind, und dass zwei in Querrichtung des Aufbaus ausserhalb der Längsträger (2, 3) liegende Stäbe (10, 11) vorhanden sind, die mit den Querträgern (5, 6) verbunden sind, wobei die Widerstandsmomente der beiden Stäbe (10, 11) wesentlich geringer sind als die Widerstandsmomente der beiden Längsträger (2, 3).

2. Absetzkipper-Aufbau nach Anspruch 1, dadurch gekennzeichnet, dass die Arbeitszylinder (16, 17) einerseits an den Schwenkarmen (7, 8) und andererseits am vorderen Querträger (5) angelenkt sind.

3. Absetzkipper-Aufbau nach Anspruch 1, dadurch gekennzeichnet, dass am hinteren Querträger (6) nach unten ragende, teleskopisch ausfahrbare Abstützungen (18, 19) vorhanden sind.

4. Absetzkipper-Aufbau nach Anspruch 1, dadurch gekennzeichnet, dass die Schwenkarme (7, 8) in Querrichtung des Aufbaus ausserhalb der Stäbe (10, 11) verschwenkbar angeordnet sind.

5. Absetzkipper-Aufbau nach Anspruch 1, dadurch gekennzeichnet, dass die Längsträger (2, 3) eine obere Stützfläche aufweisen, welche höher liegt als die höchsten Erhebungen der übrigen Rahmenteile.

6. Absetzkipper-Aufbau nach Anspruch 3, dadurch gekennzeichnet, dass die Abstützungen (18, 19) etwa in der Verlängerung der Stäbe (10, 11) nach hinten und unten abstehend angeordnet sind, wobei die oberen Enden der Abstützungen (18, 19) der Lagerung der Welle (9) für die Schwenkarme (7, 8) dienen.

## Claims

1. Supporting structure for a setting down dump truck, having pivot arms (7, 8) located on supports and operating cylinders (16, 17) for the operation thereof, characterized in that the supports are parts of a flat I-shaped frame (1), whereby the web of the I-frame consists of at least two longitudinal runners (2, 3) serving to support the structure on the chassis (4) of the vehicle and to take up the load, and whereby the beams of the I-frame consist of at least one rear and one front lateral runner (5, 6) connected to the longitudinal runners, in that the two pivot arms (7, 8) are mounted to a shaft (9) located in the area of the rear lateral runner (6), and in that there are provided two bars (10, 11) extending in lateral direction of the structure outside of the longitudinal runners (2, 3) and connected to the lateral runners (5, 6), whereby the section modulus of the two bars (10, 11) is considerably lower than the section moduli of the two longitudinal runners (2, 3).

2. Supporting structure in accordance with claim 1, characterized in that the operating cylinders are pivotably mounted on the one hand to the pivot arms (7, 8) and on the other hand to the front lateral runner (5).

3. Supporting structure in accordance with claim 1, characterized by downwards extending telescopically extendable supports (18, 19) located at the rear lateral runner (6).

4. Supporting structure in accordance with claim 1, characterized in that the pivot arms (7, 8) are pivotably mounted outside of the bars (10, 11) relative to the lateral extent of the structure.

5. Supporting structure in accordance with claim 1, characterized in that the longitudinal runners (2, 3) comprise an upper supporting surface which is located higher than the highest elevations of all other parts of the frame.

6. Supporting structure in accordance with claim 3, characterized in that the supports (18, 19) are located substantially in the extension of the bars (10, 11) projecting rearwards and downwards, whereby the upper ends of the supports (18, 19) serve as bearing of the shaft (9) for the pivot arms (7, 8).

## Revendications

1. Structure de benne amovible pour camion, comportant des bras pivotants (7, 8) montés sur des poutres et des vérins moteur (16, 17) pour leur actionnement, caractérisée en ce que les poutres constituent des parties d'un bâti plat (1) en forme de I, l'âme du bâti en I se composant d'au moins deux poutres longitudinales (2, 3) qui servent à l'appui de la structure sur le châssis (4) du véhicule et à l'absorption de la charge, les poutres du bâti en I se composant d'au moins une poutre transversale avant (5) et d'une poutre transversale arrière (6) qui sont reliées aux poutres longitudinales (2, 3), en ce que les deux bras pivotants (7, 8) sont montés sur un arbre (9) disposé dans la zone de la poutre transversale arrière (6) et en ce qu'il est prévu deux poutrelles (10, 11) disposées, dans la direction transversale de la structure, à l'extérieur des poutres longitudinales (2, 3) et qui sont reliées aux poutres transversales (5, 6), les moments résistants des deux poutrelles (10, 11) étant bien plus petits que les moments résistants des deux poutres longitudinales (2, 3).

2. Structure de benne amovible selon la revendication 1, caractérisée en ce que les vérins moteurs (16, 17) sont articulés, d'une part, sur les bras pivotants (7, 8) et, d'autre part, sur la poutre transversale avant (5).

3. Structure de benne amovible selon la revendication 1, caractérisée en ce qu'il est prévu, sur la poutre transversale arrière (6), des appuis (18, 19) faisant saillie vers le bas et déployables télescopiquement.

4. Structure de benne amovible selon la revendication 1, caractérisée en ce que les bras pivotants (7, 8) sont montés pivotants à l'extérieur des poutrelles (10, 11) selon la direction transversale de la structure.

5. Structure de benne amovible selon la revendication 1, caractérisée en ce que les poutres longitudinales (2, 3) comportent une surface supérieure d'appui qui est placée plus haut que les saillies les plus hautes des autres parties du bâti.

6. Structure de benne amovible selon la revendication 3, caractérisée en ce que les appuis (18, 19) sont disposés à peu près dans le prolongement des poutrelles (10, 11) en étant décalés vers l'arrière et vers le bas, les extrémités supérieures des appuis (18, 19) servant à soutenir l'arbre (9) pour les bras pivotants (7, 8).

# Fig.1

Fig. 2

Fig. 3